# EUROPÄISCHE PATENTSCHRIFT

(11) **EP 4 170 298 B1**
(45) Veröffentlichungstag und Bekanntmachung des Hinweises auf die Patenterteilung: **20.08.2025**
(21) Anmeldenummer: 21203925.9
(22) Anmeldetag: 21.10.2021
(51) Int. Cl.: G01F 23/284

(54) **RADARMESSGERÄT, MESSANORDNUNG UND LINSE**
RADAR MEASURING APPARATUS, MEASURING ARRANGEMENT AND LENS
APPAREIL DE MESURE RADAR, DISPOSITIF DE MESURE ET LENTILLE

(43) Veröffentlichungstag der Anmeldung: 26.04.2023
(73) Patentinhaber: VEGA Grieshaber KG, 77709 Wolfach (DE)
(72) Erfinder: Lenk, Fritz, 77761 Schiltach (DE); Olschewski, Florian, 77736 Zell am Harmersbach (DE)
(74) Vertreter: Patentanwälte Bauer Vorberg Kayser

(56) Entgegenhaltungen:
- EP-A1- 3 168 580
- CN-U- 210 664 669
- US-A1- 2008 204 351
- US-A1- 2018 113 020
- US-A1- 2019 128 728
- US-A1- 2020 003 603
- US-B2- 10 725 160
- US-B2- 10 969 265

## Beschreibung

Die vorliegende Erfindung betrifft ein Radarmessgerät, insbesondere ein Radarfüllstandmessgerät, eine Messanordnung aus einem Radarmessgerät 1 in einer Aufnahme sowie eine Linse für ein solches Radarmessgerät.

Zum Messen des Füllstands oder Grenzstands eines Füllmediums in einer Prozessumgebung, bspw. einem Rohr, einem Behälter oder dergleichen, sind Radarmessgeräte allgemein bekannt. Solche Radarmessgeräte weisen Antennensysteme auf, die über Linsen in die Prozessumgebung abstrahlen, oder Radarwellen auf einen Stab oder eine Seilsonde aufkoppeln (geführte Welle).

Aus dem Stand der Technik sind Radarmessgeräte, bspw. Radarfüllstandmessgeräte bekannt, die nach dem Laufzeitprinzip einen Füllstand eines in einem Behälter befindlichen Füllguts, insbesondere von Flüssigkeiten und Schüttgütern detektieren. Solche Radarfüllstandmessgeräte sind bspw. mit Hornantennen und/oder Linsen ausgestattet, über die ein eingekoppeltes HF-Signal in Richtung des Füllgutes abgestrahlt und von diesem reflektiert wird. In einem kombinierten Sende- und Empfangssystem des Radarfüllstandmessgerätes werden die vom Füllgut reflektierten Signale erfasst und ausgewertet.

Hornantennen haben grundsätzlich einen einfachen und robusten Aufbau, einen sehr guten Wirkungsgrad und sind kostengünstig herzustellen.

Zur Strahlformung ist es bekannt, dass solche Hornantennen an einem in Hauptabstrahlrichtung eines Antennenhorns vorderseitigen Endes eine dielektrische Linse aufweisen können. Die sich im Antennenhorn im Wesentlichen kugelsegmentförmig ausbreitenden elektromagnetischen Wellen werden auf diese Weise in möglichst parallele und sich in Hauptabstrahlrichtung ausbreitende Wellenfronten überführt und so eine Richtwirkung der Antenne erzielt.

Eine Strahlformung kann auch bereits bei der Erzeugung eines Sendesignals und/oder beim Empfang eines Empfangssignals erfolgen, wenn als Send- und/oder Empfangselement eine Mehrzahl von in der Regel in Form eines Arrays angeordneten Sendern und/oder Empfängern zum Einsatz kommt. Dies wird dann als digitale Strahlformung (Beamforming) bezeichnet.

Insbesondere können FMCW-Radarmessgeräte verwendet werden (FMCW: Frequency Modulated Continuous Wave), die dadurch ebenfalls eine Topologie der Oberfläche oder eine Position eines Objekts erfassen können. Ein Anwendungsbeispiel ist die Füllstandmessung in geschlossenen oder offenen Behältern, und insbesondere auch die Bestimmung einer Schüttgutmenge. Die FMCW-Radarmessgeräte können Array-Antenneneinrichtung mit einer Vielzahl an Antennenelementen, bspw. in Form von flächigen Strahlerelementen, aufweisen. Die Array-Antenneneinrichtung ist eingerichtet zum Aussenden des FMCW-Sendesignals in Richtung des Objekts und zum Empfangen eines entsprechenden, reflektierten Empfangssignals. Es kann sich um kombinierte Sende- und Empfangsantennen handeln oder um getrennte Sende- und Empfangsantennen. Bei dem FMCW-Sendesignal handelt es sich um ein frequenzmoduliertes Dauerstrichsignal, bei dem die Sendefrequenz innerhalb eines Frequenzbandes während einer Messung verändert wird, typischerweise in Form einer kontinuierlichen oder gestuften Rampe.

Mit einem solchen FMCW-Radarmessgerät ist es möglich, eine sogenannte digitale Strahlformung durchzuführen, um einen Raumbereich mit dem Sendesignal abzutasten, so dass sich aus dem reflektierten Empfangssignal eine Oberflächentopologie im abgetasteten Raumbereich berechnen lässt.

Es sei an dieser Stelle angemerkt, dass im Folgenden der Einfachheit halber von Radarmessgeräten oder Radarfüllstandmessgeräten gesprochen wird. Die in Bezug auf Radarmessgerät und Radarfüllstandmessgeräte beschriebenen Merkmale sind aber in gleicher Weise für radarbasierte Füllstandmessgeräte, Grenzstandmessgeräte, Trennschichtmessgeräte und topologieerfassende Radarfüllstandmessgeräte gültig.

Zur Aufnahme eines solchen Radarmessgerätes weist die Prozessumgebung, also bspw. ein solcher Behälter, eine Aufnahme auf, die bspw. als Klemm- oder Rohrverschraubungsstutzen ausgebildet sein kann. Im Stand der Technik sind auch Aufnahmen in Form von Adaptern bekannt, die einen Prozessanschluss des Radarfüllstandmessgeräts auf eine an der Prozessumgebung verfügbare oder einsetzbare Aufnahme adaptieren.

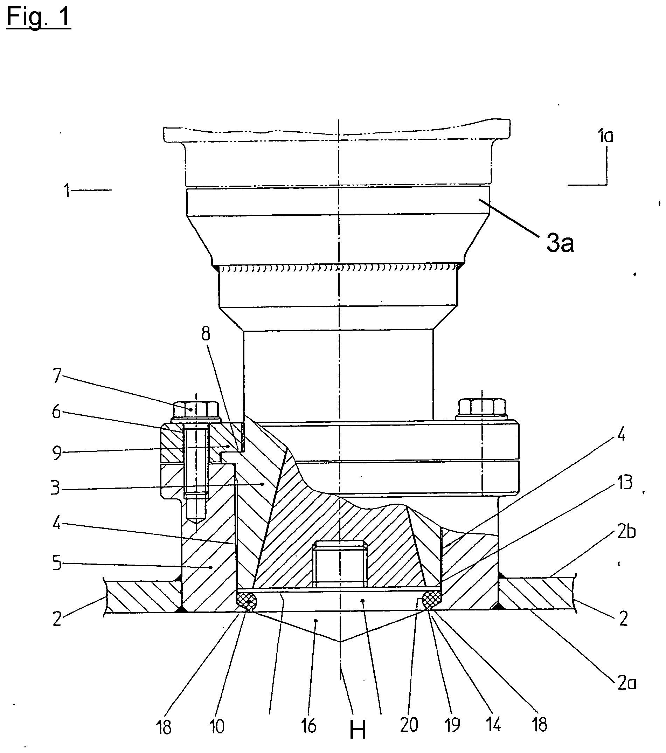

Eine Messanordnung aus einem Radarfüllstandmessgerät 1 und einer Aufnahme 5 gemäß dem Stand der Technik ist in Figur 1 gezeigt.

Wie dies aus der Schnittdarstellung in Fig. 1 ersichtlich ist, ist gemäß dem vorliegenden Ausführungsbeispiel das Radarmessgerät 1 als Radarfüllstandmessgerät 1 und die Aufnahme 5 als Flansch 5 an einer Öffnung in einer Behälterwand eines Behälters 2 ausgebildet.

Das Radarfüllstandmessgerät 1 weist in einem in Hauptabstrahlrichtung H rückwärtigen Bereich eine Radarelektronik 1a auf, die unter anderem eine Signalerzeugung von Sendesignalen zum Abstrahlen in den Behälter 2 und eine Signalverarbeitung von an bspw. einem Füllgut in dem Behälter 2 reflektierten und empfangenen Radarsignalen bewerkstelligt. Von der Radarelektronik 1a ausgehend, erstreckt sich ein Prozessanschluss 3 in Richtung des Behälterinnenraums des Behälters 2, wobei der Prozessanschluss 3 vorliegend integral mit einer Hornantenne zur Abstrahlung und zum Empfang der Radarwellen ausgebildet ist. Der vordere Abschnitt der Hornantenne ist mit einer dielektrischen Linse 16 abgeschlossen. Der Prozessanschluss 3 mit der daran angeordneten Linse 16 ragt in eine DurchgangsÖffnung 4 hinein, welche in der Wandung des Behälters 2 ausgebildet ist.

Um eine stabile Anordnung des Radarfüllstandmessgeräts 1 in der Durchgangsöffnung 4 zu ermöglichen, ist in der Behälterwandung des Behälters 2 ein Flansch 5 ausgebildet bzw. an dieser angeordnet. Der Flansch 5 ragt aus dem Behälter 2 vorzugsweise nach außen hin hinaus, um so die Durchgangsöffnung 4 mit einer größeren Führungs- und Anlagefläche auszubilden.

Außerdem dient der Flansch 5 zur Befestigung des Radarfüllstandmessgerätes 1 an dem Behälter 2. Bei der dargestellten Ausführungsform weist der Flansch 5 in seinem Außenumfangsbereich eine Gewindebohrung 6 auf, in welche eine Spannschraube 7 zum Verspannen des Radarfüllstandmessgerätes 1 eingeschraubt werden kann. Das Radarfüllstandmessgerät 1 weist an einem Außenumfang des Prozessanschlusses 3 einen Mitnehmer 8 auf, welcher von einer Spannschelle 9 übergriffen wird, wobei die Spannschelle 9 mit Hilfe der Spannschraube 7 an dem Flansch 5 befestigt wird. Je nach Stärke einer Dichtung 10 und/oder Länge des Messgerätstutzens relativ zu der Position des Mitnehmers 8 an der Umfangswandung, kann der Mitnehmer 8 zugleich als Anschlag für eine gewünschte Endposition dienen, wie dies durch den am Flansch 5 anliegenden Mitnehmer 8 beispielhaft dargestellt ist.

Bei der dargestellten Ausführungsform ist der Flansch 5 in der Wandung des Behälters 2 eingeschweißt. Dies ermöglicht eine besonders glatte Oberfläche im Bereich der Behälterinnenseite 2a, da nach dem Verschweißen des Flansches 5 an der Wandung des Behälters 2 eine Glättung und Polierung vorgenommen werden kann. Es sind aber auch andere Befestigungsformen in der Aufnahme 5 möglich, bspw. mittels einer Überwurfmutter, die in ein Außengewinde an dem Flansch 5 eingreift, einem Einschraubgewinde, mittels dessen das Radarmessgerät 1 in ein Innengewinde des Flansches 5 eingeschraubt werden kann, oder verschiedene Adaptierungen, je nach Anforderungen des Prozesses.

Die Innenseite der Durchgangsöffnung 4 und die Außenseite des Radarfüllstandmessgerätes 1 weisen in dem Übergangsbereich bzw. Nachbarbereich zur Behälterinnenseite 2a des Behälters 2 eine spezielle Ausformung zur Aufnahme 5 eines oder mehrerer Dichtungselemente auf. Dies dient dazu, eine besonders stabile Halterung des Radarfüllstandmessgerätes 1 in der Durchgangsöffnung 4 zu ermöglichen, wobei zugleich eine glatte Oberfläche der Behälterinnenseite 2a auch im Übergangsbereich zu der Stirnseite des Radarfüllstandmessgerätes 1 ermöglicht wird. Insbesondere kann eine Dichtung 10 in Form eines im Wesentlichen handelsüblichen O-Rings verwendet werden.

Die Innenwandung der Durchgangsöffnung 4 ist so ausgebildet, dass sie zu der Behälterinnenseite 2a hin in Richtung parallel einer Hauptabstrahlrichtung H des Radarfüllstandmessgerätes 1, durch die Durchgangsöffnung 4 hindurch verläuft. D. h., die Durchgangsöffnung 4 verjüngt sich unter Ausbildung einer in die Durchgangsöffnung 4 hineinragenden Öffnungswandung 18 in Richtung der Behälterinnenseite 2a. Mit anderen Worten verbreitet sich der Flansch 5 zur Behälterinnenseite 2a hin in die Durchgangsöffnung 4 hineinführend, beispielsweise in Form eines kleinen Vordaches.

Die Neigung bzw. Steilheit der in die Durchgangsöffnung 4 zur Behälterinnenseite 2a hineinragenden Wandung 18 ist dabei so dimensioniert, dass für eine zwischen dieser Wandung 18 und einem Mitnehmer 13 des Radarfüllstandmessgerätes 1 eingespannte Dichtung 10 ein Widerlager ausgebildet wird. Außerdem ist die Neigung so gewählt, dass die gegen diese Wandung 18 gedrückte Dichtung 10 in Richtung eines spaltförmigen Abstandsbereichs 14 gedrückt wird, welcher zwischen der innenseitigen Wandung der Durchgangsöffnung 4 im Nachbarbereich zur Behälterinnenseite 2a und dem dortigen Außenumfang des Radarfüllstandmessgerätes 1, vorliegend der Linse 16 ausgebildet ist.

Um eine aufwändige Bearbeitung des Behälters 3 bzw. der Behälterwandung und/oder des Flansches 5 in diesem Bereich zu vermeiden haben sich im Stand der Technik verschiedene Adapter durchgesetzt, die einerseits die zuvor beschriebene Ausgestaltung der Durchgangsöffnung 4 aufwiesen und über einen standardisierten Verbindungsmechanismus mit dem Behälter 2 verbunden werden können. Als Beispiel seien hier der sog. Clamp-Anschluss (DIN32676, ISO 2852), Rohrverschraubung DIN 11851, Rohrverschraubung DIN 11864-1, aseptischer Anschluss F40 mit Nutüberwurfmutter, aseptischer Anschluss mit Spannflansch, DRD-Anschluss, SMS-Verschraubung, Neumo Biocontrol Anschluss oder Varivent-Adapter und weitere genannt.

Das Radarfüllstandmessgerät 1 weist in seinem vorderseitigen Abschnitt, vorliegend im Bereich eines Außenumfangs der Linse 16 in dem Übergangsbereich zur Behälterinnenseite 2a hin einen Umfang auf, welcher derart schmaler ausgebildet ist als ein dortiger Durchmesser der Durchgangsöffnung 4, dass ein Abstandsbereich 14 ausgebildet wird.

In einem Abstand von der Behälterinnenseite 2a aus weist das Radarfüllstandmessgerät 1 einen Mitnehmer 13 für die Dichtung 10 auf. Der Mitnehmer 13 ist vorliegend als integraler Bestandteil der Linse 16 ausgebildet. Der Mitnehmer 13, die davor befindliche Umfangswandung der Linse 16, sowie die innenseitige Wandung der Durchgangsöffnung 4 und des in diese hineinragenden Wandungsabschnitts der in die Durchgangsöffnung 4 hineinragenden Öffnungswandung 18 bilden einen Raum zur Aufnahme 5 der Dichtung 10 aus.

Beim Einsetzen des Radarfüllstandmessgerätes 1 in die Durchgangsöffnung 4 wird die in diesem Bereich befindliche Dichtung 10 eingespannt und von dem Mitnehmer 13 in Richtung der Behälterinnenseite 2a und der in die Durchgangsöffnung 4 hineinragenden Öffnungswandung 18 gedrückt bzw. gepresst. Insbesondere auch durch die Neigung der in die Durchgangsöffnung 4 hineinragenden Öffnungswandung 18 des Flansches 5 bzw. der Behälterwandung des Behälters 2 wird die Dichtung 10 in den Abstandsbereich 14 zwischen der in die Durchgangsöffnung 4 hineinragenden Öffnungswandung 18 und dem Außenumfang des Radarfüllstandmessgerätes 1, vorliegend der Linse 16, hineingedrückt. Die Dichtung 10 wird dabei nicht nur in den Abstandsbereich 14 hineingedrückt, sondern bis zu der Behälterinnenseite 2a oder vorzugsweise leicht in den Innenraum des Behälters 2 hineinquellend gedrückt. Dabei ragt die in die Durchgangsöffnung 4 hineinragende Öffnungswandung 18 schräg in Richtung des Abstandsbereiches 14, so dass die hineinragende Öffnungswandung 18 als Widerlager und gleichzeitig Führungselement für die angedrückte Dichtung 10 dient.

Die Linse 16 ist im vorliegenden Ausführungsbeispiel zentral über einen Gewindebolzen, der an die Linse 16 angeformt ist, mit einer Füllung 54 der Hornantenne 50 verbunden.

Aus CN 210 664 669 U ist ein Radarmessgerät bekannt, bei dem eine Radarkuppel mit einer Hornantenne verschraubt ist.

US 2008/204351 A1 zeigt für eine Antenne für einen Radar-Füllstandsmesser eine Befestigungsvorrichtung zur lösbaren Montage eines dielektrischen Einsatzes in der Antenne. Die Befestigungsvorrichtung kann ein durchgehender Klemmring sein, der den dielektrischen Einsatz an seinem Platz in der Antenne festklemmt. Auch können federbelastete Kugeln zum Einsatz kommen.

Es ist die Aufgabe der vorliegenden Erfindung, ein Radarmessgerät, insbesondere Radarfüllstandmessgerät, anzugeben, das ein verbessertes Handling aufweist. Ferner soll eine aus einem solchen Radarmessgerät und einer Aufnahme gebildete Messanordnung sowie eine Linse für ein solches Radarmessgerät angegeben werden.

Diese Aufgabe wird durch ein Radarmessgerät, insbesondere Radarfüllstandmessgerät, mit den Merkmalen des Patentanspruchs 1, eine Messanordnung mit den Merkmalen des Patentanspruchs 14 sowie durch eine Linse für ein Radarmessgerät mit den Merkmalen des Patentanspruchs 16 gelöst.

Vorteilhafte Ausgestaltungen und Varianten der Erfindung ergeben sich aus den Unteransprüchen und der nachfolgenden Beschreibung. Die in den Unteransprüchen einzeln aufgeführten Merkmale können in beliebiger, technisch sinnvoller Weise miteinander als auch mit den in der nachfolgenden Beschreibung näher erläuterten Merkmale kombiniert werden und andere vorteilhafte Ausführungsvarianten der Erfindung darstellen.

Ein erfindungsgemäßes Radarmessgerät, insbesondere Radarfüllstandmessgerät, weist ein Gehäuse auf und ist abdichtend mit einer Aufnahme verbindbar, wobei das Gehäuse vorderseitig als Prozessanschluss ausgebildet ist und wobei an dem Gehäuse vorderseitig eine dielektrische Linse angeordnet und mit dem Prozessanschluss derart verbunden ist, dass die Linse in Axialrichtung, insbesondere in Richtung einer Hauptabstrahlrichtung des Radarmessgeräts, relativ zu dem Gehäuse festgelegt ist. Erfindungsgemäß zeichnet sich das Radarmessgerät dadurch aus, dass zwischen der Linse und dem Prozessanschluss eine formschlüssige Verbindung ausgebildet ist.

Radarfüllstandmessgeräte basierend auf dem Prinzip der Laufzeitmessungen. Bei den Laufzeitmessungen werden die Signallaufzeiten von ausgesandten Messsignalen, insbesondere Radarsignalen bestimmt. Aus diesen Signallaufzeiten wird dann die gewünschte Messgröße ermittelt, beispielsweise ein Füllstand oder Grenzstand.

Als Prozessumgebung wird der Raum verstanden, in dem ein Füllmedium, dessen Füllstand, Grenzstand, Grenzschicht oder Topologie ermittelt werden soll, angeordnet ist. Die Prozessumgebung kann bspw. ein Behälter in Form eines Tanks, Containers, Rohrs oder Silos sein, an dem das Radarmessgerät angeordnet wird. Der Behälter kann selbst eine Aufnahme für das Radarmessgerät aufweisen, oder einen Flansch oder Stutzen, an dem das Radarmessgerät mittels eines Adapters angeordnet wird.

Unter dem Begriff Adapter werden in der vorliegenden Anmeldung Komponenten verstanden, die den Prozessanschluss des Radarmessgeräts an eine Aufnahme der Prozessumgebung adaptieren, d.h. anpassen. Bspw. kann der Prozessanschluss als Einschraubgewinde ausgebildet sein und mittels des Adapters ein Anschluss bspw. an ein anderes Einschraubgewinde oder eine Clamp-Aufnahme (DIN32676, ISO 2852) bewerkstelligt werden. Als weitere Anschlussmöglichkeit sind Rohrverschraubung DIN 11851, Rohrverschraubung DIN 11864-1, aseptischer Anschluss F40 mit Nutüberwurfmutter, aseptischer Anschluss mit Spannflansch, DRD-Anschluss, SMS-Verschraubung, Neumo Biocontrol Anschluss oder Varivent-Adapter genannt.

Das Gehäuse des Radarmessgeräts kann ein- oder mehrteilig ausgebildet sein und dient in der Regel dem Schutz der in dem Gehäuse angeordneten Komponenten, bspw. einer Elektronik zur Signalverarbeitung und einem optionalen Anzeige- und/oder Bedienmodul. Dass der vordere Teil des Gehäuses als Prozessanschluss ausgebildet ist, bedeutet, dass der vordere Teil des Radarfüllstandmessgeräts so ausgebildet ist, dass dieses mit einer Prozessumgebung verbindbar ist. Der Prozessanschluss kann mit dem Gehäuse einstückig ausgebildet, oder mit diesem verbunden sein. In der Regel wird der Prozessanschluss aus einem für die Prozessumgebung geeignet ausgewählten, bspw. mechanisch und chemisch beständigen Material, bspw. einem geeignet legierten Edelstahl wie 1.4404 (316L) oder 2.4602 (Hastelloy C-22) oder PEEK oder Keramik gefertigt sein. Für einen rückseitigen Teil des Gehäuses können häufig aufgrund der dort geringeren chemischen und mechanischen Anforderungen günstigere Materialien, bspw. Kunststoffe oder Bleche bspw. aus einem niedriger legierten Stahl, verwendet werden.

Als Prozessanschluss wird typischerweise der Teil eines Feldgeräts bezeichnet, mit dem dieses in einer Prozessumgebung anordenbar ist. Der Prozessanschluss stellt damit die mechanische Schnittstelle zwischen Feldgerät und Prozessumgebung dar.

Die Hauptabstrahlrichtung ist die Richtung, in der das Radarmessgerät infolge der Richtwirkung einer verwendeten Antenne oder aufgrund strahlformender Maßnahmen ohne ein digitales Beamforming am stärksten abstrahlt. Bei Radarfüllstandmessgeräten ist das in der Regel eine Oberflächennormale auf eine durch ein zur Prozessumgebung weisendes Ende des Prozessanschlusses gebildete Ebene.

Die Verbindung zwischen der Linse und dem Prozessanschluss erfolgt vorzugsweise umfänglich, d.h. in einem am Umfang der Linse befindlichen Bereich. Das bedeutet insbesondere, dass die formschlüssige Verbindung vorzugsweise in einem beim Aussenden der Radarstrahlung nicht unmittelbar durchstrahlten Bereich angeordnet ist und damit keine negativen Auswirkungen auf die strahlformende Wirkung der Linse hat. In anderen Worten ist ein linsenseitiger Teil der formschlüssigen Verbindung im Wesentlichen in Radialrichtung außen an der Linse angeordnet. Das bedeutet insbesondere, dass die Verbindung zwischen der dielektrischen Linse und dem Prozessanschluss ausgehend von einem Außenumfang der dielektrischen Linse bspw. nicht weiter als 10% eines Radius der dielektrischen Linse nach innen erfolgt. Der Radius der dielektrischen Linse ergibt sich aus dem Prozessanschluss und der Dicke der eingesetzten Dichtung, sowie der Ausformung des hineinragenden Öffnungswandung. Hierdurch wird die Ausformung der Dichtung beeinflusst.

Die Linse ist an dem Prozessanschluss vorderseitig angeordnet, d.h. insbesondere, dass die Linse zwar abschnittsweise innerhalb des Prozessanschlusses angeordnet sein kann, aber im Wesentlichen vorderseitig, d.h. in Richtung der Hauptabstrahlrichtung an einem der Prozessumgebung zugewandten Ende des Prozessanschlusses sitzt. Die Linse ist von vorne her in den Prozessanschluss eingesetzt bzw. an diesem angeordnet. Die Linse weist dabei wenigstens abschnittsweise einen Durchmesser auf, der größer ist als ein vorderseitiger Innendurchmesser des Prozessanschlusses. In anderen Worten ist ein Durchmesser der Linse wenigstens in einem Bereich größer als eine lichte Weite des Prozessanschlusses, sodass die Linse vorderseitig an dem Prozessanschluss anschlägt und nicht durch diesen hindurchgeschoben werden kann. Eine solche Anordnung hat ferner den Vorteil, dass die Linse an dem Prozessanschluss insbesondere umlaufend anliegen und so eine gute Überdruckfestigkeit der Linse erreicht werden kann.

Durch die erfindungsgemäße Anordnung mit einer formschlüssigen Verbindung wird außerdem erreicht, dass die Linse bei einer Demontage des Radarfüllstandmessgeräts nicht verloren geht. Dies ist insbesondere bei Linsen, die zwischen den Prozessanschluss und der Aufnahme der Prozessumgebung angeordnet sind, vorteilhaft. Eine solche Anordnung ist außerdem von Vorteil, da dadurch die Anzahl der abzudichtenden Übergänge reduziert werden kann.

Es sei an dieser Stelle noch angemerkt, dass unter einer Linse gemäß der vorliegenden Anmeldung nicht nur dielektrische, die elektromagnetische Strahlung lenkende Komponenten bei frei abstrahlenden Radarmessgeräten verstanden werden, sondern auch dielektrische Komponenten gemeint sind, die bspw. dazu dienen die elektromagnetische Strahlung auf eine Sonde, bspw. einen Stab oder ein Seil aufzukoppeln und/oder die Sonde zu isolieren. Diese Komponenten sind ebenfalls dielektrisch aktiv und beeinflussen die elektromagnetische Strahlung, die von dem Radarmessgerät ausgesendet wird und werden daher im Sinne der vorliegenden Anmeldung ebenfalls als Linsen verstanden.

In einer Variante des Radarfüllstandmessgeräts ist die formschlüssige Verbindung als Rastverbindung ausgebildet. Eine Rastverbindung ermöglicht eine einfache und kostengünstige Bereitstellung einer formschlüssigen Verbindung und ist auch produktionstechnisch mit geringem Aufwand zu realisieren. Eine Rastverbindung kann einfach so ausgestaltet werden, dass sie werkzeuglos oder mit einfachen Werkzeugen hergestellt werden kann, d.h. dass insbesondere zum Einsetzen der Linse und zum Herstellen der formschlüssigen Verbindung kein Werkzeug notwendig ist. Wird für die Montage bspw. eine Presse verwendet, kann sichergestellt werden, dass die Linse zentrisch und ohne ein Verkanten eingepresst wird.

Unter einer Rastverbindung soll vorliegend eine Verbindung verstanden werden, bei der eine erste Komponente und eine zweite Komponente in einer Verbindungsrichtung dadurch mechanisch verbunden sind, dass ein Rastelement in Verbindungsrichtung hinter einem Hinterschnitt oder einer Auflage einer oder beider Komponenten zu liegen kommt. Durch das Hintergreifen des Hinterschnitts durch das Rastelement wird eine Bewegung in Verbindungsrichtung ab einer Anlage des Rastelements an dem Hinterschnitt unterbunden.

Rastelemente können bspw. Rastnasen oder Ringe sein, die durch eine bewegliche Lagerung in Verbindungsrichtung gesehen hinter den Hinterschnitt gebracht werden können und sich dort bspw. durch eine gelenkige oder federelastische Lagerung hinter den Hinterschnitt bewegen. Vorzugsweise ist die Verbindungsrichtung parallel zur Hauptabstrahlrichtung H des Radarmessgeräts und der Hinterschnitt ist ein Abschnitt, der in Radialrichtung verläuft, bspw. eine Stufe oder ein Steg.

Ein Formschluss kann auch durch eine Ringfeder, ein Doppelgewinde, ein Rechtsgewinde für die Aufschnapplinse und ein Linksgewinde für die Antenne erreicht werden. In einer weiteren Variante kann der Formschluss mittels einer Kulissenführung, seitliches Einschieben der Linsen in den Prozessanschluss mit radialer Verriegelung oder dergleichen erreicht werden.

In einer Variante ist die die formschlüssige Verbindung als Schnappverbindung ausgebildet. Schnappverbindungen sind Funktionselemente zum lösbaren und unlösbaren, einfachen formschlüssigen Fügen von Bauteilen. Dabei verformt sich ein Teil elastisch und verhakt anschließend lösbar oder unlösbar mit dem anderen Teil. Schnappverbindungen können bspw. über Schnapphaken realisiert werden. Bei Schnappverbindungen wird die Elastizität eines der verwendeten Werkstoffe, meistens von Kunststoffen oder Federstahl, für die Verbindung zweier Bauteile genutzt. In einer Variante ist die Schnappverbindung als Ringschnappverbindung ("Schnappzylinder") realisiert.

Die Schnappverbindung kann bspw. als Ringschnappverbindung, bei der ein durchgehender Schnappring zum Einsatz kommt, ausgebildet sein. Eine Ringschnappverbindung kann besonders vorteilhaft sein, da diese rotationssymmetrisch ausgebildet und damit die Linse insgesamt als Drehteil gefertigt werden kann. Der Schnappring, an dessen Ende ein umlaufender Steg als Schnappelement - das in einem Längsschnitt wie ein Schnapphaken aussieht - angeordnet ist, kann in diesem Fall in einer Fertigungsmaschine gemeinsam mit der gesamten Linse gedreht werden.

Dies kann insbesondere bei Werkstoffen der Linse, die nicht oder nur schlecht mittels eines Spritzgussverfahrens hergestellt werden können, von Vorteil sein. Ferner können geringe Stückzahlen ein Grund dafür sein, anstelle eines Spritzgussverfahrens ein Drehteil zu verwenden. Ein für hygienische Anwendungen typischerweise eingesetztes Material, ist Polyetheretherketon (PEEK). PEEK ist ein hochtemperaturbeständiger, chemisch beständiger und abrasionsresistenter, thermoplastischer Kunststoff der gut als Material für die Linse geeignet ist.

Die Ringschnappverbindung kann damit einerseits einen vorzugsweise umlaufenden Steg mit Rastelementen bzw. dem Rastelement und andererseits eine vorzugsweise umlaufende Auflage als Widerlager aufweisen.

Vorzugsweise ist dabei der Steg linsenseitig und die Auflage prozessanschlussseitig ausgebildet ist. Diese Aufteilung hat sich als besonders günstig herausgestellt, da auf diese Weise die Flexibilität eines Materials der Linse zur Realisierung einer Federwirkung genutzt werden kann. Der Prozessanschluss mit der Auflage, die als Widerlager wirkt, kann dann bspw. aus Edelstahl ausgebildet werden.

Der Ring und/oder die Auflage kann in Umfangsrichtung segmentiert ausgebildet sein. Dies kann bspw. dafür genutzt werden, um eine Flexibilität des Federelements zu vergrößern und ein Zusammenfügen der Komponenten zu erleichtern. Durch eine segmentierte Ausgestaltung des Schnapprings, wird eine Kompression in Umfangsrichtung beim Einsetzten des Schnapprings verringert und so das Einsetzen vereinfacht.

Einzelne über einen Umfang der Linse verteilte, vorzugsweise gleichverteilte Rasthaken können gegenüber einem Schnappring kürzer und mit größerer Materialstärke ausgebildet werden, sodass diese auch stabiler sind.

In einer Ausgestaltungsform ist ein linsenseitiger Teil der formschlüssigen Verbindung aus dem gleichen Material wie die Linse geformt. Das hat den Vorteil, dass die Linse und der linsenseitige Teil der formschlüssigen Verbindung in einem Arbeitsgang hergestellt werden können. Bspw. kann die Linse mit daran angeordnetem linsenseitigem Teil der formschlüssigen Verbindung in einem einzigen Spritzgussverfahren als Spritzgussteil oder einem Drehprozess als Drehteil hergestellt werden. Auch Kombinationen aus den verschiedenen Prozessen sind möglich und können zum Einsatz kommen.

In einer alternativen Ausgestaltung kann die Linse wenigstens zweiteilig aus einem Linsenkörper und einem Verbindungsteil ausgebildet sein, wobei dann das Verbindungsteil als linsenseitiger Teil der formschlüssigen Verbindung aus einem anderen Material als der Linsenkörper geformt sein kann. Eine solche Ausgestaltung hat den Vorteil, dass bspw. die Linse aus einem dielektrisch und an die hygienischen Anforderungen angepassten Kunststoff, bspw. PEEK, und das Verbindungsteil aus einem an die mechanischen Anforderungen der Befestigung angepassten und ggf. einfach zu verarbeitenden Kunststoff gefertigt sind.

Damit können bspw. durch eine Verbindung aus einem PEEK-Linsenkörper mit einem stabilen und spritzgussfähigen Kunststoff stabile und gleichzeitig dielektrisch angepasste Linsen gefertigt werden.

Der Linsenkörper und der Verbindungsteil können separat hergestellt und durch eine geeignete Verbindungstechnik miteinander verbunden werden. Bspw. kann eine Verbindung durch Kleben, Ultraschallschweißen oder Laserschweißen hergestellt werden. Alternativ sind bspw. auch Schraubverbindungen, Stirnschraubverbindung, weitere Schnappverbindungen und Presspassungen möglich.

Besonders einfach kann eine solche zweiteilige Linse aber mittels eines Zweikomponenten-Spritzgussverfahrens hergestellt werden. Bei einem solchen Zweikomponenten-Spritzgussverfahren wird bspw. der Linsenkörper aus einem ersten Material, bspw. PEEK vorgefertigt und als Einleger (Insert) in ein Spritzgusswerkzeug eingelegt. Der Verbindungsteil kann dann angespritzt oder der Linsenkörper teilweise umspritzt werden, sodass eine stoffschlüssige Verbindung zwischen den beiden Teilen entsteht.

In einer Variante ist in dem Prozessanschluss ein Einsatz angeordnet, der vorzugsweise integral mit einer Antenne, vorzugsweise einer Hornantenne ausgebildet ist. Die Vorteile einer Hornantenne wurden weiter oben bereits ausführlich erläutert. Es kann der Einsatz aber auch mit einer anderen Antenne, bspw. mit einer Planarantenne ausgestaltet sein. Die Planarantenne kann, bspw. als sog. Phased-Array-Antenne, mit einstellbarer Hauptabstrahlrichtung H ausgebildet sein. Antennen mit einstellbarer Hauptabstrahlrichtung H können insbesondere in topologieerfassenden Radarmessgeräten zum Einsatz kommen.

Durch die Variante mit einem Einsatz, der vorzugsweise die Antenne ausbildet, oder aufnimmt, wird ein Aufbau erreicht, bei dem der Prozessanschluss besonders gut an die Anforderungen der Prozessumgebung angepasst sein kann.

Der Einsatz kann dann wiederum aus einem an die dortigen Anforderungen angepassten Material sein.

In einer Ausgestaltungsform ist der Einsatz als Mitnehmer zum Vorspannen der Linse gegenüber dem Prozessanschluss ausgebildet. Der Einsatz kann dazu bspw. in den Prozessanschluss eingeschraubt sein. Dazu kann der Einsatz selbst ein Gewinde aufweisen, mittels dessen er in den Prozessanschluss, der dann ein korrespondierendes Gewinde aufweist, eingeschraubt ist. Alternativ kann auch ein Mitnehmer mit einem Gewinde in den Prozessanschluss eingeschraubt werden und so den Einsatz in den Prozessanschluss drücken.

Der Einsatz ist in einer Variante derart angeordnet und ausgebildet, dass er in in den Prozessanschluss eingesetztem Zustand ein Lösen der formschlüssigen Verbindung blockiert. Vorzugsweise ist der Einsatz so dimensioniert, dass ein Lösen der Rastelemente, bspw. der Rastnasen durch ein mechanisches Blockieren verhindert wird. Dadurch wird sichergestellt, dass die Verbindung zwischen Linse und Prozessanschluss in montiertem Zustand des Feldgeräts nicht versehentlich gelöst werden kann.

Der Einsatz kann ferner einen Anschlag, vorzugsweise einen umlaufenden Anschlag zur Begrenzung einer Einsetztiefe des Anschlags in den Prozessanschluss aufweisen. Durch einen derartigen Anschlag wird verhindert, dass die Linse durch ein Einsetzen des Anschlags wieder aus dem Prozessanschluss herausgeschoben und die formschlüssige Verbindung durch ein zu tiefes Einsetzen des Einsatzes zerstört wird.

In einer Variante ist die formschlüssige Verbindung als ein zwischen dem Prozessanschluss und der Linse angeordneter Sprengring ausgebildet. Ein solcher Sprengring kann einfach in zwei korrespondierend zueinander angeordneten Nuten gelagert sein. In montiertem Zustand überlappt der Sprengring beide Nuten in Radialrichtung, sodass eine in Verbindungsrichtung formschlüssige Verbindung erreicht wird. Zum Einsetzen kann der Sprengring in einer der Nuten angeordnet sein und durch geeignete Anlaufkanten an dem anderen Bauteil aufgedehnt, oder komprimiert (gestaucht) werden.

Die hier zur Erzeugung notwendigen Nuten können bei einem rotationssymmetrischen Bauteil besonders einfach durch einen Drehprozess hergestellt werden. Der Prozessanschluss und die Linse weisen dann zueinander korrespondierend ausgebildete Nuten auf, wobei der Sprengring derart dimensioniert ist, dass er in montiertem Zustand so zwischen Prozessanschluss und Linse zu liegen kommt, dass er eine Axialbewegung wenigstens in vorderseitiger Richtung begrenzt.

In einer bevorzugten Ausgestaltung, die sowohl mit einer Rast- bzw. Schnappverbindung als auch bei Nutzung eines Sprengrings als Verbindungselement erreicht werden kann, ist die Linse relativ zu dem Prozessanschluss drehbar gelagert. Durch eine drehbare Anordnung der Linse relativ zu dem Prozessanschluss und damit auch dem Radarmessgerät wird erreicht, dass beim Befestigen des Radarmessgeräts in der Aufnahme der Prozessumgebung, bspw. durch Einschrauben eine Drehung der Linse relativ zu dem Radarmessgerät möglich ist. Eine zwischen der Linse und der Aufnahme angeordnete Dichtung, bspw. ein O-Ring kann damit ohne oder zumindest mit reduzierten Scherkräften, die auf die Dichtung wirken, eingesetzt werden. Im Idealfall steht die Linse beim Verbinden des Radarmessgeräts in die Aufnahme relativ zu dieser still, sodass in Umfangsrichtung keine Kräfte auf die zwischen der Linse und der Aufnahme angeordnete Dichtung wirken. Durch weniger Belastungen der Dichtung in Umfangsrichtung wird eine verbesserte Dichtwirkung erreicht.

In einer alternativen Ausgestaltung ist die Linse relativ zu dem Prozessanschluss drehfest gelagert. Eine drehfeste Lagerung kann sinnvoll sein, wenn die Linse bspw. mittels parallel angeordneten Heizdrähten, die in die Linse ein- oder auf die Linse aufgebracht sind, beheizt ist. Da die Metallisierung eine Abstrahlung eines elektromagnetischen Feldes behindern oder sogar unterbinden kann, kann es in diesen Fällen ausschlaggebend sein, dass das elektrische Feld senkrecht zu den Heizdrähten schwingt. Nur für diese Polarisation ist ein solches Gitter durchlässig.

Um eine möglichst gute Abdichtung zu erreichen, ist es vorteilhaft, wenn zwischen der Linse und dem Prozessanschluss eine erste Dichtung angeordnet ist, wobei vorzugsweise die Linse einen Aufnahmeraum für die erste Dichtung ausbildet. Es ist vorteilhaft, wenn mittels der ersten Dichtung unmittelbar zwischen der Linse und dem Prozessanschluss abgedichtet wird. Durch eine konsequente Reduktion von abzudichtenden Spalten und Materialübergängen kann eine verbesserte Dichtigkeit sowie eine Reduktion von Spalten, in denen sich Kontaminationen ablagern können, erreicht werden. Vorzugsweise bildet die Linse einen ersten Aufnahmeraum für die Dichtung aus, der vorzugsweise als in der Linse ausgebildet ausgestaltet sein kann. Damit ist die erste Dichtung radial zwischen Linse und Prozessanschluss angeordnet und verhindert ein Eindringen von Medium in einen Zwischenraum zwischen dem Prozessanschluss und der Linse.

Vorzugsweise ist die Linse so ausgebildet, dass diese in Hauptabstrahlrichtung wenigstens teilweise vor dem Prozessanschluss sitzt. Dadurch kann erreicht werden, dass zur Prozessumgebung hin lediglich ein Spalt zwischen der Linse und der Aufnahme der Prozessumgebung abgedichtet werden muss. Es ist dabei vorteilhafterweise so, dass ein Aufnahmeraum für die Dichtung durch die Linse und die Aufnahme gebildet und begrenzt ist.

Eine erfindungsgemäße Messanordnung aus einem Radarmessgerät, insbesondere einem Radarfüllstandmessgerät und einer Aufnahme, bei der das Radarmessgerät ein Gehäuse aufweist und abdichtend mit der Aufnahme verbindbar ist, zeichnet sich dadurch aus, dass das Radarmessgerät gemäß der obigen Beschreibung ausgebildet ist.

Besonders vorteilhaft ist, wenn unmittelbar zwischen der Linse und der Aufnahme eine zweite Dichtung angeordnet ist, die vorzugsweise die Anforderungen hygienischer Prozesse erfüllt. Das bedeutet insbesondere, dass die Abdichtung totraumfrei und gut reinigbar ist.

Eine besonders gute Abdichtung des Übergangs zwischen dem eingebauten Radarmessgerät und einer benachbarten Innenwandung der Aufnahme, bspw. des Behälters oder Adapters, ergibt sich dadurch, dass in einen zwischen diesen befindlichen seitlichen Abstandsbereich, der sich dadurch ergibt, dass die Linse im Bereich einer von der Aufnahme ausgebildeten Durchgangsöffnung einen Durchmesser aufweist, der kleiner ausgebildet ist, als ein Durchmesser der Durchgangsöffnung, ein Teil der zweiten Dichtung hineingedrückt wird.

Zum verformenden Hineindrücken wird die zweite Dichtung beim Einsetzen des Radarmessgeräts von einem Mitnehmer am Radarmessgerät in Richtung des Behälterinnenraums gedrückt, wobei sich eine Durchgangsöffnung, in welche das Radarmessgerät eingesetzt ist, in Richtung der Behälterinnenseite hin verjüngt, somit ein Widerlager für die zweite Dichtung ausbildet. Durch eine derartige Anordnung und ein entsprechendes Zusammensetzen wird ein Teil der zweiten Dichtung in den Zwischenraum bzw. Abstandsbereich zwischen der Durchgangsöffnungsinnenseite und einem Außenumfang der Linse hineingedrückt. Dieses Dichtungsteil, das verformt in den Abstandsbereich hineingedrückt wird, bewirkt eine Einspannung des Radarmessgeräts innerhalb der Durchgangsöffnung in seitlicher Richtung, d. h. in Richtung einer Ebene im Wesentlichen senkrecht zur Einbaurichtung des Radarmessgeräts, welche durch die Aufnahme im Einbaubereich aufgespannt wird. Außerdem bewirkt die Dichtung eine Abdichtung, welche ein Eindringen von Anteilen des Füllmediums in den Abstandsbereich verhindert. Es entsteht eine im Wesentlichen glatt verlaufende Oberfläche von der Aufnahme über die in den Abstandsbereich hineingedrückten Dichtungsanteile zu einer innenseitigen Oberfläche, d.h. vorliegend der zum Prozess weisenden Oberfläche der Linse, des Radarmessgeräts. Die innenseitige Oberfläche des Radarmessgeräts ist vorliegend bspw. als ein Antennenkegel eines Radarfüllstandmessgeräts ausgebildet. Neben dem Verhindern des Eindringens von Füllmedium in Spalten, Ritzen oder dergleichen oder gar den inneren Bereich des Radarmessgerät selber, wird somit auch eine Reinigung bei einer derartigen Anordnung erleichtert. Außerdem ist hervorzuheben, dass durch diese Anordnung eine besonders stabile Verspannung des Radarmessgeräts innerhalb der Durchgangsöffnung des Behälters ermöglicht wird.

Das Radarmessgerät weist einen Mitnehmer für die zweite Dichtung auf, der diese in den Abstandbereich zwischen der Linse und der Aufnahme drückt. Der Mitnehmer kann dabei z.B. als integraler Bestandteil der z.B. aus PTFE oder PEEK hergestellten Linse, als eigentliche Stirnseite des Prozessanschlusses, als Stirnseite des Einsatzes oder als Trenn- oder Übergangselement zu der Linse ausgebildet sein. Der Mitnehmer, die davor befindliche Umfangswandung der Linse sowie eine innenseitige Wandung der Durchgangsöffnung der Aufnahme und eines in diese hineinragenden Wandungsabschnitts der in die Durchgangsöffnung hineinragenden Öffnungswandung bilden einen Raum zur Aufnahme der zweiten Dichtung aus.

Durch die Anordnung der Dichtung unmittelbar zwischen Linse und Aufnahme, d.h. insbesondere Behälter oder Adapter, ohne zwischengeschaltete Komponenten ermöglicht die Reduktion der abzudichtenden Spalte, eine besonders dichte Ausgestaltung und damit den Einsatz in hygienischen Anwendungen, d.h. insbesondere Anwendungen die durch das reinigungsgerechte Gestalten von Geräten und Anlagen zur Vermeidung von Kontamination von Lebensmittel geprägt sind.

Idealerweise weist der Prozessanschluss einen Tiefenanschlag zur Begrenzung der Einsetztiefe des Radarfüllstandmessgeräts in die Aufnahme auf. Durch diesen Tiefenanschlag kann eine vorgegebene Einsetztiefe des Radarmessgeräts in die Aufnahme präzise eingehalten und so eine gewünschte Kompression der zweiten Dichtung vorgegeben werden.

In einer Ausgestaltung wirkt der Prozessanschluss mit einer zum Prozess weisenden Vorderseite als Mitnehmer auf die Linse, die ihrerseits als Mitnehmer für die zweite Dichtung wirkt. Die Linse weist dazu einen umlaufenden Steg auf, der rückseitig als Anlagefläche für den Prozessanschluss dient und vorderseitig die zweite Dichtung in den Abstandsbereich drückt.

Eine Erfindungsgemäße Linse für ein Radarmessgerät, insbesondere ein Radarfüllstandmessgerät weist einen Linsenkörper und einen Verbindungsteil auf, wobei der Verbindungsteil geeignet ausgebildet ist, eine formschlüssige Verbindung zwischen der Linse und dem Radarmessgerät auszubilden.

Die oben bereits angeführten Merkmale der Linse in Bezug auf deren Verbindung mit dem Prozessanschluss des Radarmessgeräts gelten auch für die Linse in Alleinstellung. Insbesondere kann ein linsenseitiger Teil der formschlüssigen Verbindung als ein Teil einer Rastverbindung, insbesondere einer Schnappverbindung, ausgebildet sein. Linsenkörper und Verbindungsteil können insbesondere einstückig und/oder aus dem gleichen Material ausgebildet sein. Alternativ kann der Verbindungsteil aus einem anderen Material als der Linsenkörper ausgebildet sein. Insbesondere kann der Linsenkörper aus einem dielektrisch angepassten, vorzugsweise temperaturbeständigen und weiter vorzugsweise chemisch und/oder mechanisch beständigen Material ausgeformt sein.

Die vorliegende Erfindung wird nachfolgend anhand von Ausführungsbeispielen unter Bezugnahme auf die beigefügten Figuren eingehend erläutert. Es zeigen:
- Figur 1: eine Messanordnung aus einem Radarmessgerät 1 und einer Aufnahme 5 gemäß dem Stand der Technik (schon behandelt),
- Figur 2a: ein erstes Ausführungsbeispiel einer Messanordnung mit einem Radarmessgerät 1 und einer Aufnahme 5,
- Figur 2b: eine Vergrößerung eines ersten Ausschnitts aus Figur 2a,
- Figur 2c: eine Vergrößerung eines zweiten Ausschnitts aus Figur 2a,
- Figur 3a: ein zweites Ausführungsbeispiel einer Messanordnung mit einem Radarmessgerät 1 und einer Aufnahme 5,
- Figur 3b: eine Vergrößerung eines Ausschnitts aus Figur 3a und
- Figur 4: eine alternative Ausgestaltung der Linse 16.

In den Figuren bezeichnen - soweit nicht anders angegeben - gleiche Bezugszeichen gleiche oder einander entsprechende Komponenten mit gleicher Funktion.

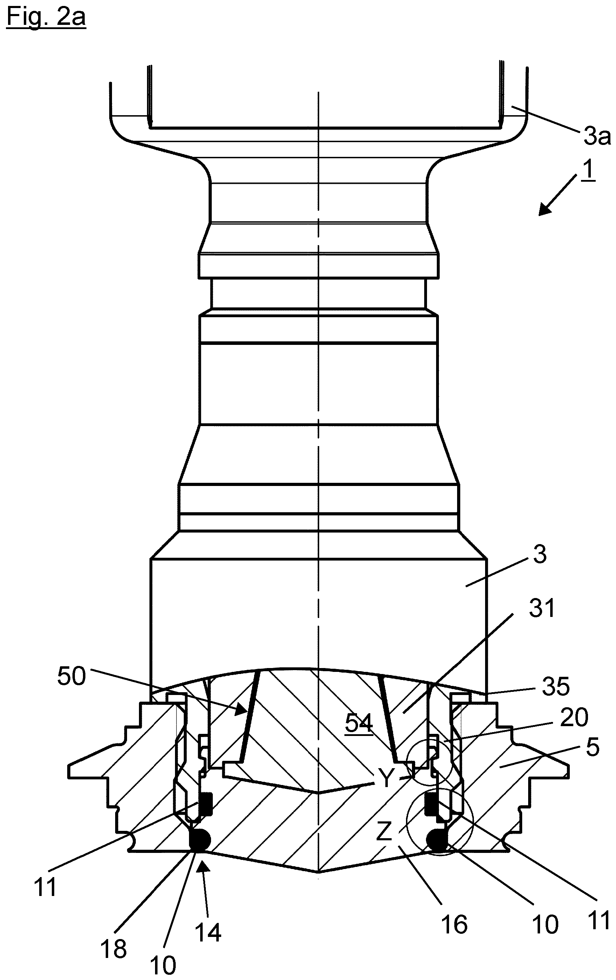

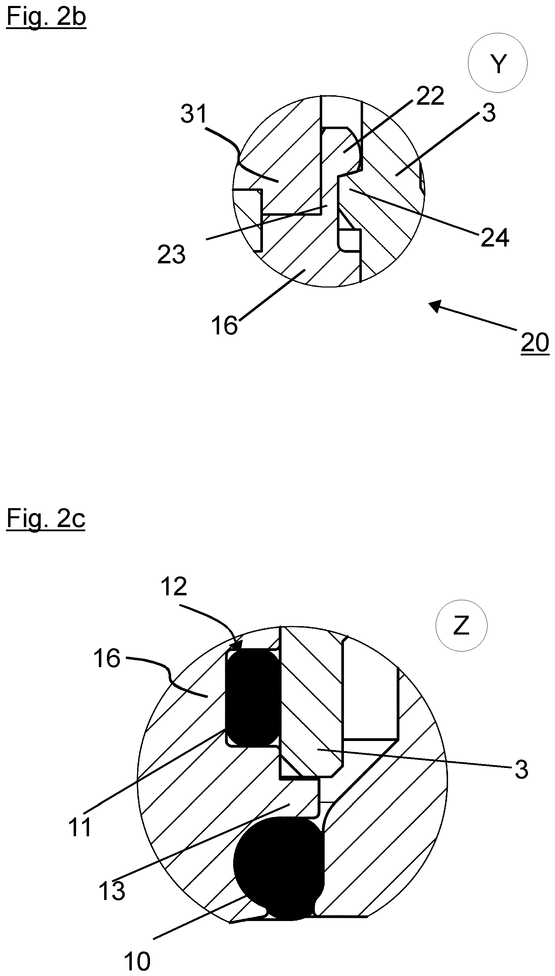

Figur 2a zeigt ein erstes Ausführungsbeispiel einer Messanordnung mit einem Radarmessgerät 1 und einer Aufnahme 5, die im vorliegenden Fall als Klemmadapter ausgebildet ist. Das Radarmessgerät 1 ist im vorliegenden Ausführungsbeispiel als Radarfüllstandmessgerät 1 ausgebildet und erstreckt sich von einem rückseitigen Gehäuse 3a über einen mit einem Einschraubgewinde ausgebildeten Prozessanschluss 3 zu einer vorderseitig, d. h. zu einer Prozessumgebung I hin orientiert, angeordneten Linse 16. Die Linse 16 sitzt in der Aufnahme 5 und ist durch den Prozessanschluss 3 in Richtung der Prozessumgebung I vorgespannt. Die Linse 16 ist umlaufend über eine formschlüssige Verbindung 20 mit dem Prozessanschluss 3 verbunden, wobei die detaillierte Ausgestaltung der formschlüssigen Verbindung 20 in der in Figur 2b dargestellten Ausschnittsvergrößerung Y gezeigt ist.

Die Linse 16 ist aus einem dielektrischen Material, das insbesondere für hygienische Anwendungen geeignet ist, gefertigt. Ein hierfür geeignetes Material ist beispielsweise Polyetheretherketon (PEEK), dass als teilkristalliner thermoplastischer Kunststoff sehr gute mechanische und auch thermische Eigenschaften aufweist. Die Linse 16 ist mit einem Durchmesser derart ausgebildet, dass zwischen einem Außenumfang der Linse 16 und einer Innenwandung der Aufnahme 5, vorliegend des Adapters, ein umlaufender Ringspalt besteht, sodass ein Abstandsbereich 14 zwischen der Aufnahme 5 und der Linse 16 gebildet ist. In den Abstandsbereich 14 wird eine zwischen der Linse 16 und der Aufnahme 5 angeordnete zweite Dichtung 10, die vorliegend als handelsüblicher O-Ring ausgebildet ist, durch einen an die Linse 16 angeformten Mitnehmer 13 gedrückt. Auf dem Mitnehmer 13 wirkt im vorliegenden Ausführungsbeispiel eine vordere Stirnfläche des Prozessanschlusses 3, der die Linse 16 auf diese Weise in Richtung der Prozessumgebung vorspannt. Der Prozessanschluss 3 ist im vorliegenden Ausführungsbeispiel über ein Einschraubgewinde in den Adapter 5 eingeschraubt, wobei eine Einschraubtiefe durch einen rückseitig an dem Adapter 5 anliegenden Tiefenanschlag 35 begrenzt wird. Durch diesen Tiefenanschlag 35 wird verhindert, dass die Linse 16 in vorderseitiger Richtung aus dem Adapter 5 herausgeschoben wird. Die Lage der Linse 16 relativ zu der Aufnahme 5 kann damit vorab festgelegt werden.

Zwischen der Linse 16 und dem Prozessanschluss 3 ist in einem Bereich, in dem die Linse 16 innerhalb des Prozessanschlusses 3 angeordnet ist, eine umlaufende, in einer Nut 12 der Linse 16 angeordnete erste Dichtung 11 angeordnet. Diese erste Dichtung 11 verhindert ein Eindringen von Medium ins Innere des Radarmessgeräts 1 und spannt die Linse 16 in dem Prozessanschluss 3 ein. Um bei einer Montage und Demontage zu verhindern, dass die Linse 16 aus dem Prozessanschluss 3 herausfällt, ist diese über die formschlüssige Verbindung 20, die im vorliegenden Ausführungsbeispiel als Ringschnappverbindung ausgebildet ist, in dem Prozessanschluss 3 gehaltert. Ein Lösen der Ringschnappverbindung wird durch einen Einsatz 31, der in dem Prozessanschluss 3 angeordnet ist verhindert. Der Einsatz 31 ist so ausgebildet und angeordnet, dass er ein Lösen der Ringschnappverbindung dadurch verhindert, dass er ein auffedern der Rastelemente unterbindet. Der Einsatz 31 ist im vorliegenden Ausführungsbeispiel einstückig mit einem Antennenhorn 52 einer Hornantenne 50 zur Abstrahlung der Radarstrahlung des Radarmessgeräts 1 ausgebildet. Die Hornantenne 50 ist mit einer Füllung 54 aus einem dielektrischen Material gefüllt.

Figur 2b zeigt eine Ausschnittsvergrößerung der formschlüssigen Verbindung 20 aus Figur 2a. In dem dargestellten Ausschnitt ist erkennbar, dass in einem Umfangsbereich an der Linse 16 für einen Federsteg 23 ein Rastelement 22 angeformt ist. Der Federsteg erstreckt sich in Axialrichtung rückwärtiger Richtung und ermöglicht, dass die Linse 16 von vorne her in den Prozessanschluss 3 des Radarfüllstandmessgeräts 1 eingeschoben werden kann. Durch entsprechende Anlaufkanten am Rastelement 22 einerseits und an einem als Auflage 24 ausgebildeten Steg 24 des Prozessanschlusses 3 andererseits wird ermöglicht, dass das Rastelement 22 hinter dem Steg 24 zu liegen kommt und so eine Bewegung der Linse 16 in Axialrichtung in vorderseitiger Richtung unterbindet. Um ein Lösen der Rastverbindung zwischen der Linse 16 und dem Prozessanschluss 3 zu verhindern, ist der Einsatz 31 so dimensioniert, dass er in montiertem Zustand unmittelbar hinter dem Federsteg 23 der Rastverbindung zum Liegen kommt und so ein Auffedern des Federstegs 23 und eine Bewegung des Rastelement 22 über den Steg 24 hinweg verhindert. Gleichzeitig wird die Linse 16 durch den Einsatz 31 in vorderseitiger Richtung vorgespannt, sodass auch eine Bewegung in rückseitiger Richtung in diesem Zustand bereits unterbunden wird.

Figur 2c zeigt eine Ausschnittsvergrößerung des Details Z aus Figur 2a.

In dieser Ausschnittsvergrößerung ist besonders deutlich zu erkennen, dass die Linse 16 einen sich in Radialrichtung erstreckenden umlaufenden Steg 24 aufweist, der als Mitnehmer 13 für die zweite Dichtung 10 wirkt. Der Mitnehmer 13 ist in rückseitige Richtung in unmittelbarem Kontakt mit einer Stirnseite des Prozessanschlusses 3, die die Linse 16 in eingebautem Zustand in Richtung der Prozessumgebung I vorspannt. Durch den Mitnehmer 13 wird die zweite Dichtung 10 strahlformend in den Abstandsbereich 14 zwischen der Aufnahme 5 und der Linse 16 gedrückt und quillt in Richtung der Prozessumgebung leicht aus diesem Abstandsbereich 14 hervor. Durch die unmittelbare Abdichtung zwischen der Linse 16 und der Aufnahme 5 wird eine Vorspannung der Linse 16 in der Aufnahme 5 erreicht und somit eine besonders stabile und dichte Anordnung gewährleistet. Die erste Dichtung 11 zwischen der Linse 16 und dem Prozessanschluss 3 sitzt in einer umlaufenden Nut 12 die einen Aufnahmeraum 12 für die erste Dichtung 11 bildet. Durch die formschlüssige Verbindung 20 zwischen der Linse 16 und dem Prozessanschluss 3, wird eine Bewegung der Linse 16 in Axialrichtung unterbunden, jedoch eine Rotation der Linse 16 um eine Längsachse A des Radarmessgeräts weiterhin zugelassen. Es wird auf diese Weise erreicht, dass bei einem Einsetzen des Radarmessgeräts 1 in die Aufnahme 5, die Linse 16 samt der zweiten Dichtung 10 relativ zur Aufnahme 5 stillsteht oder zumindest weniger rotiert, als dies drehfest in Verbindung zwischen der Linse 16 und dem Prozessanschluss 3 der Fall wäre. Auf diese Weise werden Scherungen der zweiten Dichtung 10 in Umfangsrichtung reduziert und so eine verbesserte Abdichtung zwischen der Linse 16 und der Aufnahme 5 erreicht.

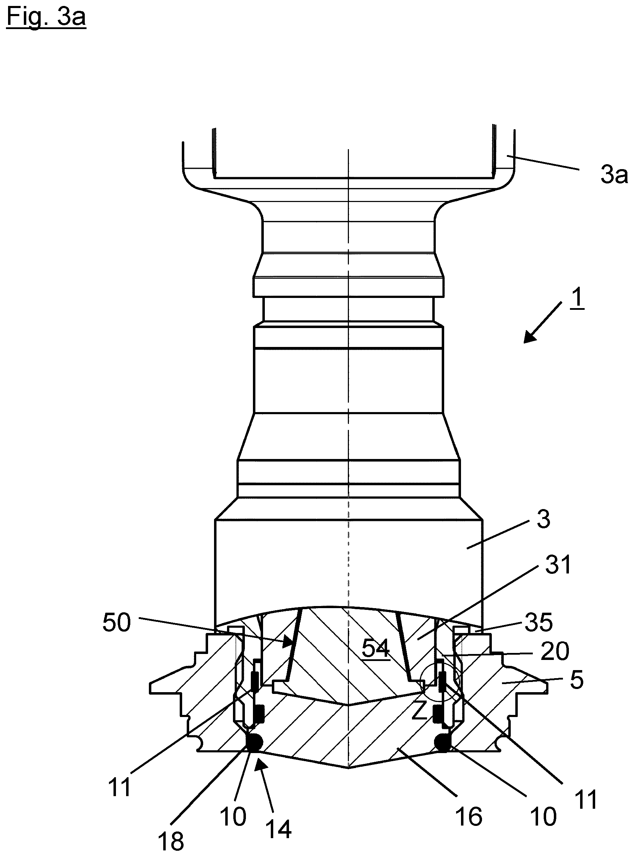

Figur 3a zeigt ein zweites Ausführungsbeispiel einer Messanordnung in einem Radarmessgerät 1 und einer Aufnahme 5, wobei die formschlüssige Verbindung 20 zwischen der Linse 16 und dem Prozessanschluss 3 durch einen in zueinander korrespondierend ausgebildete Nuten 20 der Linse 16 und des Prozessanschlusses 3 angeordneten Sprengring 26 bewerkstelligt ist. Der weitere Aufbau des in Figur 3a dargestellten Ausführungsbeispiels unterscheidet sich insofern nicht von dem Aufbau der Messanordnung gemäß Figur 2a, sodass diesbezüglich auf die dortigen Ausführungen verwiesen wird.

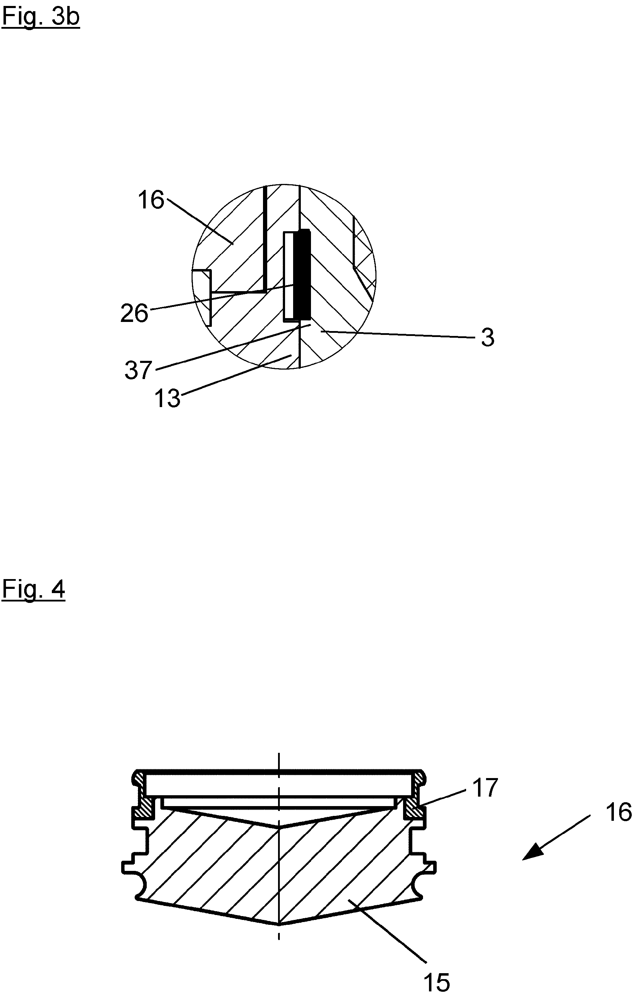

Eine Ausschnittsvergrößerung der formschlüssigen Verbindung 20 zwischen der Linse 16 und dem Prozessanschluss 3 ist in Figur 3b, die eine Ausschnittsvergrößerung des Details Z aus Figur 3a zeigt, dargestellt.

In der Ausschnittsvergrößerung der Figur 3b ist deutlich zu erkennen, dass der Sprengring 26 in einer Nut 12 der Linse 16 angeordnet ist, wobei der stirnseitige Abschnitt des Prozessanschlusses 3 eine Anlaufkante derart aufweist, dass der Sprengring 26 bei einem Einsetzen der Linse 16 in den Prozessanschluss 3 komprimiert, vollständig in die Nut 12 der Linse 16 geschoben wird und sich anschließend, nachdem er über eine am vorderen Ende des Prozessanschlusses 3 ausgebildete Rastnase 37 geglitten ist, wieder expandiert. Zusätzlich zu der Rastnase 37 in bereits beschriebener Weise, bildet die Linse 16 einen durch einen umlaufenden Steg gebildeten Mitnehmer 13 für die zweite Dichtung 10 aus, sodass diese mittels des Mitnehmer 13 in vorderseitiger Richtung in den Abstandsbereich 14 zwischen der Aufnahme 5 und der Linse 16 gedrückt wird.

Figur 4 zeigt eine alternative Ausgestaltungsform der Linse 16, wobei die in der in Figur 4 gezeigte Ausgestaltung aus einem Linsenkörper 15 mit angeformten Mitnehmer 13 und Aufnahmeraum 12 für die zweite Dichtung 10 gebildet ist und einem Linsenkörper 15 rückseitig ein Verbindungsteil 17 angeformt ist, durch das die formschlüssige Verbindung 20 zwischen der Linse 16 und dem Prozessanschluss 3 ermöglicht wird. Das Verbindungsteil 17 kann beispielsweise in einem Zweikomponenten-Spritzgussverfahren an den Linsenkörper 15 angefahren werden. Auf diese Weise wird es ermöglicht, dass die Linse 16 aus einem Nicht-Spritzgussverfahren gegen Material gefertigt und mit dem Verbindungsteil 17 verbunden wird. Es ist auf diese Weise auch möglich, ein vergleichsweise sprödes Material, das nicht zur Ausbildung einer Federzunge für die formschlüssige Verbindung 20 geeignet ist, mit einem geeigneten elastischen Material zu verbinden, sodass die Vorzüge unterschiedlicher Materialien auf diese Weise verbunden werden können.

Wesentlich an der vorliegenden Messanordnung ist, dass in den Prozessanschluss 3 von außen eine Kunststofflinse aufgeschnappt wird. In einen von der Linse 16 innen- und rückseitig begrenzten Aufnahmeraum 12 wird ein O-Ring eingelegt, der dann unmittelbar gegen die Aufnahme 5 abdichtet und eine für hygienische Anwendungen zugelassene Abdichtung ausbildet. Dieser Prozessanschluss 3 kann unterschiedlich ausgeführt sein, sodass damit verschiedene Anschlüsse ermöglicht werden.

Die Linse 16 wird in dem Prozessanschluss 3 des Radarmessgeräts 1 über eine formschlüssige Verbindung 20, insbesondere Schnapphaken oder einen Sprengring, gehalten, auch bei einer Demontage des Radarmessgeräts 1. Die Linse 16 ist dadurch vorzugsweise drehbar in dem Prozessanschluss 3 gehalten und dreht sich dadurch beim Einschrauben in die Aufnahme 5 nicht mit. Dadurch wird eine Dichtung zwischen der Linse 16 und der Aufnahme 5, bspw. ein O-Ring bei der Montage nicht übermäßig verformt/beschädigt und die Dichtfunktion wird nicht beeinträchtigt.

Die Befestigung der Linse 16 mittels Formschluss, erfolgt bevorzugt mittels Schnapphaken, welcher vorteilhaft rotationssymmetrisch für eine günstige Herstellung als Drehteil ausgeführt ist und dazu führt, dass für die Linse 16 keine weiteren Befestigungsmaterialien benötigt werden.

### Bezugszeichenliste

- 1: Radarmessgerät, Radarfüllstandmessgerät
- 2: Behälter
- 3: Prozessanschluss
- 4: Durchgangsöffnung
- 5: Aufnahme, Flansch, Adapter
- 6: Gewindebohrung
- 7: Spannschraube
- 8: Mitnehmer
- 9: Spannschelle

- 10: Zweite Dichtung
- 11: Erste Dichtung
- 12: Aufnahmeraum, Nut
- 13: Mitnehmer
- 14: Abstandsbereich
- 15: Linsenkörper
- 16: Linse
- 17: Verbindungsteil
- 18: Öffnungswandung

- 20: Formschlüssige Verbindung
- 22: Rastelement
- 23: Federsteg
- 24: Auflage, Steg
- 26: Sprengring

- 31: Einsatz
- 33: Anschlag
- 35: Tiefenanschlag
- 37: Rastnase

- 50: Hornantenne
- 52: Antennenhorn
- 54: Füllung

- 1a: Radarelektronik
- 2a: Behälterinnenseite
- 3a: Gehäuse

- H: Hauptabstrahlrichtung
- I: Prozessumgebung

## Patentansprüche

1. Radarmessgerät (1), insbesondere Radarfüllstandmessgerät, mit einem Gehäuse, wobei das Gehäuse (3a) abdichtend mit einer Aufnahme (5) verbindbar ist, wobei das Gehäuse (3a) vorderseitig als Prozessanschluss (3) ausgebildet ist und wobei an dem Gehäuse (3a) vorderseitig eine dielektrische Linse (16) angeordnet und mit dem Prozessanschluss (3) derart verbunden ist, dass die Linse (16) in Axialrichtung relativ zu dem Gehäuse (3a) festgelegt ist,
wobei zwischen der Linse (16) mit dem Prozessanschluss (3) eine formschlüssige Verbindung (20) ausgebildet ist,
**dadurch gekennzeichnet, dass**
a) die formschlüssige Verbindung (20) als Rastverbindung und/oder als Schnappverbindung ausgebildet ist
und in dem Prozessanschluss (3) ein Einsatz (31) derart angeordnet ist, dass er ein Lösen der formschlüssigen Verbindung blockiert, wobei durch den Einsatz (31) sichergestellt ist, dass die Verbindung zwischen Linse (16) und Prozessanschluss (3) nicht versehentlich gelöst werden kann und/oder
b) die formschlüssige Verbindung (20) als Ringschnappverbindung ausgebildet ist und die Ringschnappverbindung einerseits einen Steg (23) mit Rastelementen (22) und andererseits eine Auflage (24) als Widerlager aufweist und/oder
c) die formschlüssige Verbindung (20) durch einen zwischen dem Prozessanschluss (3) und der Linse (16) angeordneten Sprengring (26) ausgebildet ist.

2. Radarmessgerät (1) gemäß Anspruch 1, wobei die formschlüssige Verbindung (20) als Ringschnappverbindung ausgebildet ist und die Ringschnappverbindung einerseits einen Steg (23) mit Rastelementen (22) und andererseits eine Auflage (24) als Widerlager aufweist **dadurch gekennzeichnet, dass**
der Steg (24) linsenseitig und die Auflage (24) Prozessanschluss (3) seitig ausgebildet ist.

3. Radarmessgerät (1) gemäß Anspruch 1 _wobei die formschlüssige Verbindung (20) als Ringschnappverbindung ausgebildet ist und die Ringschnappverbindung einerseits einen Steg (23) mit Rastelementen (22) und andererseits eine Auflage (24) als Widerlager aufweist **dadurch gekennzeichnet, dass**
der Ring und/oder die Auflage (24) in Umfangsrichtung segmentiert ausgebildet ist.

4. Radarmessgerät (1) gemäß einem der vorhergehenden Ansprüche,
**dadurch gekennzeichnet, dass**
ein linsenseitiger Teil der formschlüssigen Verbindung aus dem gleichen Material wie die Linse (16) geformt ist.

5. Radarmessgerät (1) gemäß einem der Ansprüche 1 bis 3,
**dadurch gekennzeichnet, dass**
die Linse (16) wenigstens zweiteilig aus einem Linsenkörper (15) und einem Verbindungsteil (17) ausgebildet ist, wobei das Verbindungsteil (17) als linsenseitiger Teil der formschlüssigen Verbindung aus einem anderen Material als der Linsenkörper (15) geformt ist.

6. Radarmessgerät (1) gemäß Anspruch 5,
**dadurch gekennzeichnet, dass**
der Linsenkörper (15) und das Verbindungsteil (17) mittels Zweikomponenten-Spritzguss miteinander verbunden sind.

7. Radarmessgerät (1) gemäß einem der vorhergehenden Ansprüche, wobei die formschlüssige Verbindung (20) als Rastverbindung und/oder als Schnappverbindung ausgebildet ist
und in dem Prozessanschluss (3) ein Einsatz (31) derart angeordnet ist, dass er ein Lösen der formschlüssigen Verbindung blockiert
**dadurch gekennzeichnet, dass**
der Einsatz (31) als Mitnehmer zum Vorspannen der Linse (16) gegenüber dem Prozessanschluss (3) ausgebildet ist.

8. Radarmessgerät (1) gemäß einem der vorhergehenden Ansprüche, wobei die formschlüssige Verbindung (20) als Rastverbindung und/oder als Schnappverbindung ausgebildet ist
und in dem Prozessanschluss (3) ein Einsatz (31) derart angeordnet ist, dass er ein Lösen der formschlüssigen Verbindung blockiert,
**dadurch gekennzeichnet, dass**
der Einsatz (31) integral mit einer Antenne, vorzugsweise einer Hornantenne (50) ausgebildet ist.

9. Radarmessgerät (1) gemäß einem der vorhergehenden Ansprüche, wobei die formschlüssige Verbindung (20) als Rastverbindung und/oder als Schnappverbindung ausgebildet ist
und in dem Prozessanschluss (3) ein Einsatz (31) derart angeordnet ist, dass er ein Lösen der formschlüssigen Verbindung blockiert,
**dadurch gekennzeichnet, dass**
der Einsatz (31) einen Anschlag (33), vorzugsweise einen umlaufenden Anschlag (33) zur Begrenzung einer Einsetztiefe des Anschlags (33) in den Prozessanschluss (3) aufweist.

10. Radarmessgerät (1) gemäß einem der vorhergehenden Ansprüche, wobei
die formschlüssige Verbindung (20) durch einen zwischen dem Prozessanschluss (3) und der Linse (16) angeordneten Sprengring (26) ausgebildet ist,
**dadurch gekennzeichnet, dass**
der Prozessanschluss (3) und die Linse (16) korrespondierend zueinander ausgebildete Nuten aufweisen und der Sprengring (26) derart dimensioniert ist, dass er in montiertem Zustand so zwischen Prozessanschluss (3) und Linse (16) zu liegen kommt, dass er eine Axialbewegung wenigstens in vorderseitiger Richtung begrenzt.

11. Radarmessgerät (1) gemäß einem der vorhergehenden Ansprüche,
**dadurch gekennzeichnet, dass**
die Linse (16) relativ zu dem Prozessanschluss (3) drehbar gelagert ist.

12. Radarmessgerät (1) gemäß einem der Patentansprüche 1 bis 10,
**dadurch gekennzeichnet, dass**
die Linse (16) relativ zu dem Prozessanschluss (3) drehfest gelagert ist.

13. Radarmessgerät (1) gemäß einem der vorhergehenden Ansprüche,
**dadurch gekennzeichnet, dass**
zwischen der Linse (16) und dem Prozessanschluss (3) eine erste Dichtung (11) angeordnet ist, wobei vorzugsweise die Linse (16) einen Aufnahmeraum (12) für die erste Dichtung (11) ausbildet.

14. Messanordnung aus einem Radarmessgerät (1), insbesondere Radarfüllstandmessgerät, und einer Aufnahme (5), wobei das Radarmessgerät (1) ein Gehäuse (3a) aufweist und abdichtend mit der Aufnahme (5) verbindbar ist,
**dadurch gekennzeichnet, dass**
das Radarmessgerät (1) gemäß einem der vorhergehenden Ansprüche ausgebildet ist.

15. Messanordnung gemäß Anspruch 14,
**dadurch gekennzeichnet, dass**
unmittelbar zwischen der Linse (16) und der Aufnahme (5) eine zweite Dichtung (10) angeordnet ist, die vorzugsweise die Anforderungen hygienischer Prozesse erfüllt.

16. Linse (16) für ein Radarmessgerät (1), wobei die Linse einen Linsenkörper (15) und einen Verbindungsteil (17) aufweist,
wobei der Verbindungsteil (17) geeignet ausgebildet ist, eine formschlüssige Verbindung zwischen der Linse (16) und dem Radarmessgerät (1) auszubilden, **dadurch gekennzeichnet, dass**
das Radargerät (1) gemäß einem der vorhergehenden Ansprüche ausgebildet ist.

17. Linse (16) gemäß Patentanspruch 16,
**dadurch gekennzeichnet, dass**
der Linsenkörper (15) und das Verbindungsteil (17) mittels Zweikomponenten-Spritzguss miteinander verbunden sind.

## Claims

1. Radar measuring device (1), in particular radar level measuring device, with a housing, wherein the housing (3a) can be connected in a sealing manner to an accommodating portion (5), wherein the housing (3a) is configured at the front as a process connection (3) and wherein a dielectric lens (16) is disposed at the front of the housing (3a) and connected to the process connection (3) such that the lens (16) is fixed in the axial direction relative to the housing (3a),
wherein a positive connection (20) is formed between the lens (16) and the process connection (3),
**characterized in that**
a) the positive connection (20) is configured as a latching connection and/or as a snap-fit connection
and an insert (31) is arranged in the process connection (3) in such a way that it blocks release of the positive connection, the insert (31) ensuring that the connection between the lens (16) and the process connection (3) cannot be inadvertently released
and/or
b) the positive connection (20) is configured as a ring snap connection and the ring snap connection has, on the one hand, a web (23) with latching members (22) and, on the other hand, a contact portion (24) as an abutment
and/or
c) the positive connection (20) is formed by a snap ring (26) arranged between the process connection (3) and the lens (16).

2. Radar measuring device (1) according to claim 1, wherein the positive connection (20) is configured as a ring snap connection and the ring snap connection has, on the one hand, a web (23) with latching members (22) and, on the other hand, a contact portion (24) as an abutment **characterized in that**
the web (23) is formed on the lens side and the contact portion (24) is formed on the process connection (3) side.

3. Radar measuring device (1) according to claim 1, wherein the positive connection (20) is configured as a ring snap connection and the ring snap connection has, on the one hand, a web (23) with latching members (22) and, on the other hand, a contact portion (24) as an abutment **characterized in that**
the ring and/or the contact portion (24) is segmented in the circumferential direction.

4. Radar measuring device (1) according to one of the preceding claims, **characterized in that**
a lens-side part of the positive-locking connection is formed from the same material as the lens (16).

5. Radar measuring device (1) according to one of claims 1 to 3, **characterized in that**
the lens (16) is formed in at least two parts from a lens body (15) and a connecting part (17), the connecting part (17) being formed as the lens-side part of the positive-locking connection from a different material than the lens body (15).

6. Radar measuring device (1) according to claim 5,
**characterized in that**
the lens body (15) and the connecting part (17) are connected to one another by means of two-component injection molding.

7. Radar measuring device (1) according to one of the preceding claims, wherein the positive connection (20) is configured as a latching connection and/or as a snap-fit connection
and an insert (31) is arranged in the process connection (3) in such a way that it blocks a release of the positive connection
**characterized in that**
the insert (31) is configured as a driver for pretensioning the lens (16) relative to the process connection (3).

8. Radar measuring device (1) according to one of the preceding claims, wherein the positive connection (20) is configured as a latching connection and/or as a snap-fit connection
and an insert (31) is arranged in the process connection (3) in such a way that it blocks a release of the positive connection,
**characterized in that**
the insert (31) is integrally formed with an antenna, preferably a horn antenna (50).

9. Radar measuring device (1) according to one of the preceding claims, wherein the positive connection (20) is configured as a latching connection and/or as a snap-fit connection
and an insert (31) is arranged in the process connection (3) in such a way that it blocks a release of the positive connection,
**characterized in that**
the insert (31) has a stop (33), preferably a circumferential stop (33) for limiting an insertion depth of the stop (33) into the process connection (3).

10. Radar measuring device (1) according to one of the preceding claims,
wherein the positive connection (20) is formed by a snap ring (26) arranged between the process connection (3) and the lens (16), **characterized in that**
the process connection (3) and the lens (16) have grooves which correspond to one another and the snap ring (26) is dimensioned in such a way that, in the assembled state, it comes to lie between the process connection (3) and the lens (16) in such a way that it limits an axial movement at least in the front direction.

11. Radar measuring device (1) according to one of the preceding claims,
**characterized in that**
the lens (16) is rotatably mounted relative to the process connection (3).

12. A radar measuring device (1) according to any one of claims 1 to 10,
**characterized in that**
the lens (16) is mounted in a rotationally fixed manner relative to the process connection (3).

13. Radar measuring device (1) according to one of the preceding claims,
**characterized in that**
a first seal (11) is disposed between the lens (16) and the process connection (3), the lens (16) preferably forming a receiving space (12) for the first seal (11).

14. Measuring arrangement comprising a radar measuring device (1), in particular a radar level measuring device, and an accommodating portion (5), wherein the radar measuring device (1) has a housing (3a) and can be connected to the accommodating portion (5) in a sealing manner,
**characterized in that**
the radar measuring device (1) is designed in accordance with one of the preceding claims.

15. Measuring arrangement according to claim 14,
**characterized in that**
a second seal (10), which preferably meets the requirements of hygienic processes, is arranged directly between the lens (16) and the accommodating portion (5).

16. Lens (16) for a radar measuring device (1), the lens having a lens body (15) and a connecting part (17),
the connecting part (17) being suitably configured to form a positive connection between the lens (16) and the radar measuring device (1), **characterized in that**
the radar device (1) is configured according to one of the preceding claims.

17. Lens (16) according to claim 16,
**characterized in that**
the lens body (15) and the connecting part (17) are connected to one another by means of two-component injection molding.

## Revendications

1. Appareil de mesure radar (1), en particulier appareil de mesure de niveau de remplissage par radar, avec un boîtier, dans lequel le boîtier (3a) peut être relié de manière étanche à un logement (5), dans lequel le boîtier (3a) est réalisé côté avant en tant que raccord de processus (3) et dans lequel une lentille diélectrique (16) est disposée côté avant sur le boîtier (3a) et est reliée au raccord de processus (3) de telle manière que la lentille (16) est fixée dans la direction axiale par rapport au boîtier (3a), dans lequel une liaison à complémentarité de forme (20) est réalisée entre la lentille (16) et le raccord de processus (3),
**caractérisé en ce que**
a) la liaison à complémentarité de forme (20) est réalisée en tant que liaison par encliquetage et/ou en tant que liaison par enclenchement, et un insert (31) est disposé dans le raccord de processus (3) de telle manière qu'il empêche un desserrage de la liaison à complémentarité de forme, dans lequel l'insert (31) permet de garantir que la liaison entre la lentille (16) et le raccord de processus (3) ne peut pas être desserrée accidentellement et/ou
b) la liaison à complémentarité de forme (20) est réalisée en tant que liaison par enclenchement annulaire et la liaison par enclenchement annulaire présente d'une part une nervure (23) avec des éléments d'encliquetage (22) et d'autre part un support (24) en tant que butée et/ou
c) la liaison à complémentarité de forme (20) est réalisée par un circlip (26) disposé entre le raccord de processus (3) et la lentille (16).

2. Appareil de mesure radar (1) selon la revendication 1, dans lequel la liaison à complémentarité de forme (20) est réalisée en tant que liaison par enclenchement annulaire et la liaison par enclenchement annulaire présente, d'une part, une nervure (23) avec des éléments d'encliquetage (22) et, d'autre part, un support (24) en tant que butée
**caractérisé en ce que**
la nervure (24) est réalisée côté lentille et le support (24) est réalisé côté raccord de processus (3).

3. Appareil de mesure radar (1) selon la revendication 1, dans lequel la liaison à complémentarité de forme (20) est réalisée en tant que liaison par enclenchement annulaire et la liaison par enclenchement annulaire présente, d'une part, une nervure (23) avec des éléments d'encliquetage (22) et, d'autre part, un support (24) en tant que butée
**caractérisé en ce que**
l'anneau et/ou le support (24) sont réalisés de manière segmentée dans le sens circonférentiel.

4. Appareil de mesure radar (1) selon l'une quelconque des revendications précédentes,
**caractérisé en ce que**
une partie côté lentille de la liaison par complémentarité de forme est formée à partir du même matériau que la lentille (16).

5. Appareil de mesure radar (1) selon l'une quelconque des revendications 1 à 3, **caractérisé en ce que**
la lentille (16) est réalisée au moins en deux parties à partir d'un corps (15) de lentille et d'une partie de liaison (17), dans lequel la partie de liaison (17) est formée en tant que partie côté lentille de la liaison à complémentarité de forme à partir d'un matériau autre que celui du corps (15) de lentille.

6. Appareil de mesure radar (1) selon la revendication 5,
**caractérisé en ce que**
le corps (15) de lentille et la partie de liaison (17) sont reliés l'un à l'autre par moulage par injection à deux composants.

7. Appareil de mesure radar (1) selon l'une quelconque des revendications précédentes, dans lequel la liaison à complémentarité de forme (20) est réalisée en tant que liaison par encliquetage et/ou en tant que liaison par enclenchement et un insert (31) est disposé dans le raccord de processus (3) de telle manière qu'il empêche un desserrage de la liaison à complémentarité de forme
**caractérisé en ce que**
l'insert (31) est réalisé comme entraîneur pour la précontrainte de la lentille (16) par rapport au raccord de processus (3).

8. Appareil de mesure radar (1) selon l'une quelconque des revendications précédentes, dans lequel la liaison à complémentarité de forme (20) est réalisée en tant que liaison par encliquetage et/ou en tant que liaison par enclenchement et un insert (31) est disposé dans le raccord de processus (3) de telle manière qu'il empêche un desserrage de la liaison à complémentarité de forme,
**caractérisé en ce que**
l'insert (31) est intégralement réalisé avec une antenne, de préférence une antenne à cornet (50).

9. Appareil de mesure radar (1) selon l'une quelconque des revendications précédentes, dans lequel la liaison à complémentarité de forme (20) est réalisée en tant que liaison par encliquetage et/ou en tant que liaison par enclenchement et un insert (31) est disposé dans le raccord de processus (3) de telle manière qu'il empêche un desserrage de la liaison à complémentarité de forme,
**caractérisé en ce que**
l'insert (31) présente une butée (33), de préférence une butée (33) périphérique pour limiter une profondeur d'insertion de la butée (33) dans le raccord de processus (3).

10. Appareil de mesure radar (1) selon l'une quelconque des revendications précédentes, dans lequel la liaison à complémentarité de forme (20) est réalisée par un circlip (26) disposé entre le raccord de processus (3) et la lentille (16),
**caractérisé en ce que**
le raccord de processus (3) et la lentille (16) présentent des rainures réalisées de manière correspondante les unes par rapport aux autres et le circlip (26) est dimensionné de telle manière qu'il se trouve dans l'état monté entre le raccord de processus (3) et la lentille (16) de telle sorte qu'il limite un déplacement axial au moins dans la direction avant.

11. Appareil de mesure radar (1) selon l'une quelconque des revendications précédentes,
**caractérisé en ce que**
la lentille (16) est montée de manière à pouvoir tourner par rapport au raccord de processus (3).

12. Appareil de mesure radar (1) selon l'une quelconque des revendications 1 à 10, **caractérisé en ce que**
la lentille (16) est montée de manière solidaire en rotation par rapport au raccord de processus (3).

13. Appareil de mesure radar (1) selon l'une quelconque des revendications précédentes,
**caractérisé en ce que**
un premier joint d'étanchéité (11) est disposé entre la lentille (16) et le raccord de processus (3), dans lequel la lentille (16) réalise de préférence un espace de réception (12) pour le premier joint d'étanchéité (11).

14. Ensemble de mesure composé d'un appareil de mesure radar (1), en particulier d'un appareil de mesure de niveau de remplissage par radar, et d'un logement (5), dans lequel l'appareil de mesure radar (1) présente un boîtier (3a) et peut être relié de manière étanche au logement (5),
**caractérisé en ce que**
l'appareil de mesure radar (1) est réalisé selon l'une quelconque des revendications précédentes.

15. Ensemble de mesure selon la revendication 14,
**caractérisé en ce que**
un deuxième joint d'étanchéité (10) qui répond de préférence aux exigences de processus hygiéniques est disposé directement entre la lentille (16) et le logement (5).

16. Lentille (16) pour un appareil de mesure radar (1), dans laquelle la lentille présente un corps (15) de lentille et une partie de liaison (17),
dans laquelle la partie de liaison (17) est adaptée pour réaliser une liaison à complémentarité de forme entre la lentille (16) et l'appareil de mesure radar (1), **caractérisée en ce que**
l'appareil radar (1) est réalisé selon l'une quelconque des revendications précédentes.

17. Lentille (16) selon la revendication 16,
**caractérisée en ce que**
le corps (15) de lentille et la partie de liaison (17) sont reliés l'un à l'autre par moulage par injection à deux composants.
